# EUROPÄISCHE PATENTSCHRIFT

(11) **EP 3 204 272 B1**
(45) Veröffentlichungstag und Bekanntmachung des Hinweises auf die Patenterteilung: **16.12.2020**
(21) Anmeldenummer: 15753916.4
(22) Anmeldetag: 06.08.2015
(51) Int. Cl.: B60T 13/68, B60T 8/40, B60T 8/48, B60T 17/02

(54) **ELEKTRONISCH SCHLUPFREGELBARE FAHRZEUGBREMSANLAGE**
VEHICLE BRAKE SYSTEM WITH ELECTRONICAL WHEEL SLIP CONTROL
SYSTÈME DE FREINS DE VÉHICULE AVEC CONTRÔLE ÉLECTRONIQUE DE PATINAGE DE ROUE

(30) Priorität: 09.10.2014 DE 102014220542
(43) Veröffentlichungstag der Anmeldung: 16.08.2017
(73) Patentinhaber: Robert Bosch GmbH, 70442 Stuttgart (DE)
(72) Erfinder: SCHULLER, Wolfgang, 74389 Cleebronn (DE)
(86) Internationale Anmeldenummer: PCT/EP2015/068130
(87) Internationale Veröffentlichungsnummer: WO 2016/055191

(56) Entgegenhaltungen:
- WO-A1-2012/161311
- DE-A1-102010 042 534
- US-A- 4 875 741
- US-A- 6 079 796

## Beschreibung

### Stand der Technik

Die Erfindung betrifft eine elektronisch schlupfregelbare Fahrzeugbremsanlage nach den Merkmalen des Oberbegriffs des Anspruchs 1. Eine derartige Fahrzeugbremsanlage ist bekannt aus Figur 2 der Patentschrift US 4,875,741.
Bei dieser bekannten Fahrzeugbremsanlage fördern pro Bremskreis zwei Pumpen in eine gemeinsame Druckleitung. Zwischen den Pumpen sind Rückschlagventile angeordnet. Eine mit steuerbaren Mitteln ausgestattete Druckmittelverbindung verbindet die gemeinsame Druckleitung mit der Saugseite einer der Pumpen.
Diese Druckmittelverbindung zweigt in Durchströmungsrichtung der Rückschlagventile stromabwärts dieser Rückschlagventile von der Druckleitung ab.

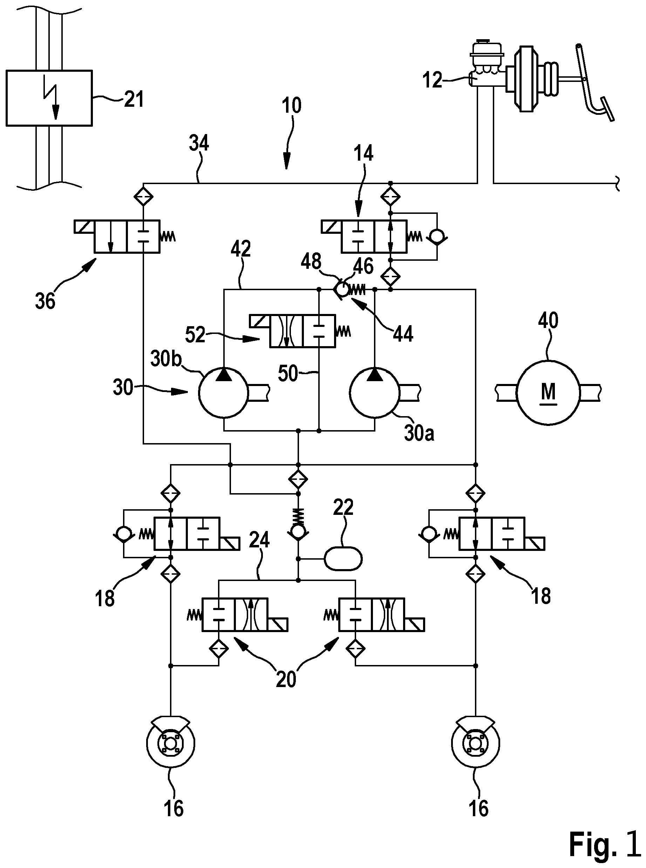

Diese Verhältnisse treffen auch für die aus der Patentschrift US 6,079,796 in der Figur 1 offenbarte Fahrzeugbremsanlage zu.

Weiterhin bekannt ist eine Fahrzeugbremsanlage nach der DE 102010042534 A1. Diese Fahrzeugbremsanlage weist zwei gleichartig aufgebaute Bremskreise mit daran angeschlossenen Radbremsen auf. Die Bremskreise sind an einen Hauptbremszylinder anschlossen, welcher von einem Fahrer durch Muskelkraft betätigbar ist. Durch Betätigung des Hauptbremszylinders wird ein Bremsdruck aufgebaut, der über elektronisch ansteuerbare Ventile den Radbremsen zugeführt wird. Jeder Bremskreis ist mit einer Druckerzeugereinheit ausgestattet, welche im Fall einer Antriebsschlupfregelung (ASR-Betriebszustand) oder einer Fahrstabilitätsregelung (ESP-Betriebszustand) dazu dient, die Radbremse unabhängig vom Fahrer mit unter Druck stehender Bremsflüssigkeit zu versorgen bzw. welche im Rahmen einer Antiblockierschutzregelung (ABS-Betriebszustand) eine Anpassung des Bremsdrucks an die am jeweiligen Rad vorherrschenden Schlupfverhältnisse vornimmt. Konventionelle Druckerzeuger sind Zahnrad- oder Kolbenpumpen.

Durch neue Systemfunktionen wird in immer kürzerer Zeit ein immer größeres Volumen an Bremsflüssigkeit an den Radbremsen benötigt. In diesem Zusammenhang sei beispielsweise die Fußgängerschutzfunktion erwähnt, bei der das Fahrzeug innerhalb kürzester Zeit bis zum Stillstand abgebremst werden muss. Bekannte Druckerzeuger weisen hierfür ein zu geringes Fördervoulmen auf und eine Vergrößerung dieses Fördervolumens ginge unmittelbar mit einer Steigerung der notwendigen Antriebsleistung und damit zwangsläufig mit einer Vergrößerung von Bauvolumen und Gewicht des dafür notwendigen Antriebsmotors einher. Die Spannungsversorgung der Antriebseinheit müsste darüber hinaus ebenfalls angepasst werden, um die höheren Stromstärken zu bewältigen. Alles zusammen würde die Kosten der Fahrzeugbremsanlage beträchtlich erhöhen.

### Vorteile der Erfindung

Eine elektronisch schlupfregelbare Fahrzeugbremsanlage nach den Merkmalen des Anspruchs 1 weist gegenüber der Lösung nach der US 4,875,741 den Vorteil auf, dass die steuerbare Druckmittelverbindung welche die Druckseite einer der Pumpen mit der Saugseite wenigstens einer der Pumpen verbindet in Durchströmungsrichtung des Rückschlagventils stromaufwärts dieses Rückschlagventils abzweigt. Zur Steuerung dieser Druckmittelverbindung sind elektronisch ansteuerbare Mittel vorgesehen, bevorzugt Druckmittelventile, die von einem Magnetaktuator oder von einem Piezoaktuator betätigbar sind.

Bei durchlässiger Druckmittelverbindung wird dadurch von einer Pumpe Bremsflüssigkeit lediglich im Kreis gepumpt, so dass diese Pumpe keinen Beitrag zur Druckmittelförderung leistet und mit dementsprechend geringer Antriebsleistung antreibbar ist.

Eine derartige Auslegung hat zum Vorteil, dass zu Beginn eines hochdynamischen Bremsvorgangs, wenn also das Druckniveau niedrig und der Volumenbedarf hoch sind, beide Pumpen gemeinsam fördern, während nach dem Erreichen einer vorgebbaren Druckschwelle der Restvolumenbedarf bis zum Erreichen des endgültigen Solldrucks niedrig ist, das Druckniveau aber bereits erhöht ist und somit das Fördervolumen einer der Pumpen ausreicht. Die vom Pumpenantrieb insgesamt aufzubringende Antriebsleistung wird auf diese Weise reduziert und vergleichmäßigt und es lassen sich leistungsmäßig kleinere Antriebseinheiten einsetzen, welche kompakter bauen, leichter und kostengünstiger sind.

Weitere Vorteile oder vorteilhafte Weiterbildungen der Erfindung ergeben sich aus den Unteransprüchen und der nachfolgenden Beschreibung.

Vorteilhafter Weise haben die Ventile zur Steuerung der Druckmittelverbindung eine Sperrstellung sowie eine Durchlassstellung und können zwischen diesen beiden Stellungen beliebig viele Zwischenstellungen einnehmen - sind also als Proportionalventile ausgebildet. Dies ermöglicht eine besonders feinfühlige Anpassung des von der Druckerzeugereinheit bereitgestellten Druckmittelvolumens. Alternativ dazu wäre es auch möglich Schaltventile einzusetzen, die von ihrer Sperrstellung in ihre Durchlassstellungen umgeschaltet werden und mit denen eine Regulierung der Durchflussmenge durch Anpassung des Taktverhältnisses bei ihrer elektronischen Ansteuerung erfolgt.

### Zeichnung

Ein Ausführungsbeispiel der Erfindung ist in der Zeichnung dargestellt und wird in der nachfolgenden Beschreibung detailliert erläutert. Die einzige Figur zeigt die Erfindung anhand eines Hydraulikschaltplans, welcher einen Bremskreis einer erfindungsgemäßen Fahrzeugbremsanlage mittels Schaltsymbolen darstellt.

### Beschreibung des Ausführungsbeispiels

In der einzigen Figur ist ein einzelner Bremskreis einer elektronisch schlupfregelbaren Fahrzeugbremsanlage dargestellt und mit der Bezugsziffer 10 versehen. Dieser Bremskreis 10 ist an einen Hauptbremszylinder 12 angeschlossen über welchen der Fahrer durch Muskelkraft, zum Beispiel durch Betätigung eines Pedals, Bremsdruck aufbauen kann. Stromabwärts des Hauptbremszylinders 12 steuert ein Umschaltventil 14 eine Druckmittelverbindung des Hauptbremszylinders 12 mit den Radbremsen 16 des Bremskreises 10. Beim Ausführungsbeispiel ist der Bremskreis 10 mit zwei Radbremsen 16 bestückt. Jeder einzelnen Radbremse 16 ist eine Druckmodulationseinrichtung aus jeweils einem vorgeschalteten Druckaufbauventil 18 und einem nachgeschalteten Druckabsenkventil 20 zugeordnet. Beide Ventile 18, 20 sind durch elektronische Ansteuerung mit einem von einem Steuergerät 21 berechneten Ansteuersignal von einer Grundstellung in eine Schaltstellung umsteuerbar. Druckaufbauventile 18 sind in ihrer Grundstellung durchlässig und sperren in ihrer Schaltstellung, während Druckabsenkventile 20 in der Grundstellung geschlossen und in ihrer Schaltstellung durchlässig sind. Über das Druckaufbauventil 18 strömt der Radbremse 16 Druckmittel zu und bewirkt einen Druckaufbau, wohingegen über das Druckabsenkventil 20 Druckmittel aus der Radbremse 16 abströmt, um das Druckniveau an dieser Radbremse 16 abzusenken. Abströmendes Druckmittel gelangt in einen mit einem Pufferspeicher 22 bestückten Rücklauf 24, welcher letztlich zu einem Sauganschluss einer Druckerzeugereinheit 30 hinführt. Diese Druckerzeugereinheit 30 saugt das Druckmittel aus dem Pufferspeicher 22 ab und lagert es unter höherem Druck den Druckaufbauventilen 18 vor, wo es dann für einen späteren Druckaufbau in der Radbremse 16 vorgehalten wird. Ein Leitungszweig 34 verbindet den Sauganschluss der Druckerzeugereinheit 30 mit dem Hauptbremszylinder 12. Dieser Leitungszweig 34 wird von einem Hochdruckschaltventil 36 gesteuert, welches in seiner Grundstellung geschlossen und in seiner Schaltstellung offen ist. Über das Hochdruckschaltventil 36 kann die Druckerzeugereinheit 30 bei betätigtem Hauptbremszylinder 12 Druckmittel aus diesem Hauptbremszylinder 12 ansaugen, falls das im Rücklauf 24 und im Pufferspeicher 22 gespeicherte Druckmittelvolumen nicht ausreichen sollte, um das vom Fahrer eingestellte Bremsdruckniveau an der Radbremse 16 bedarfsgerecht zu erhöhen.

Insoweit entspricht die beschriebene Fahrzeugbremsanlage dem aktuellen Stand der Technik. Mittels des vorgesehenen elektronischen Steuergeräts 21 lassen sich die erläuterten Komponenten der Fahrzeugbremsanlage derart ansteuern, dass der Bremsdruck an den Radbremsen 16 den Schlupfverhältnisse angepasst werden kann, die gerade an den diesen Radbremsen 16 zugeordneten Rädern der Fahrzeugs vorherrschen. Dies kann, wie dargelegt, mit oder ohne Unterstützung durch den Fahrer erfolgen. Mit einer derart aufgebauten Fahrzeugbremsanlage sind demnach Bremsvorgänge mit Antriebsschlupfregelung (ASR), mit Antiblockierschutzregelung (ABS) oder mit Fahrdynamikregelung (ESP) durchführbar.

Die erfindungsgemäße Fahrzeugbremsanlage unterscheidet sich gegenüber diesem Stand der Technik unter anderem in der Ausbildung ihrer Druckerzeugereinheit 30. Letztere umfasst erfindungsgemäß pro Bremskreis wenigstens zwei Pumpen 30a, 30b, die vorzugsweise von einem gemeinsamen Antriebsmotor 40 angetrieben sind. Beide Pumpen 30a, 30b sind druckseitig an eine gemeinsame Druckleitung 42 angeschlossen. Zwischen den Hochdruckauslässen der Pumpen 30a, 30b befindet sich ein Rückschlagventil 44, das verhindert, dass eine der Pumpen 30b gegen das Druckniveau der anderen Pumpe 30a fördert. Dieses Rückschlagventil 44 weist dazu einen Schließkörper 46 auf, der gegen einen Ventilsitz 48 druckbeaufschlagt gedrückt wird um diesen zu verschließen, sobald das Druckniveau stromabwärts des Ventilsitzes 48 höher sein sollte als stromaufwärts davon. Eine Rückschlagventilfeder ist nicht zwangsweise erforderlich. Stromaufwärts des Rückschlagventils 44, betrachtet in Durchströmungsrichtung dieses Rückschlagventils 44, zweigt eine Druckmittelverbindung 50 von der gemeinsamen Druckleitung 42 ab, welche mit der Saugseite wenigstens einer der Pumpen 30a, 30b, im Ausführungsbeispiel mit den Saugseiten beider Pumpen 30a, 30b, verbunden ist. Zur Steuerung dieser Druckmittelverbindung 50 sind elektronisch ansteuerbare Mittel in Form eines Ventils, im Folgenden als Verbindungsventil 52 bezeichnet, vorgesehen. Bei diesem Verbindungsventil 52 handelt es sich vorzugsweise um ein Proportionalventil, das in beliebig vielen Zwischenstellungen aus einer Sperrstellung (Grundstellung) in eine Durchlassstellung verbringbar ist. Mit zunehmender Ansteuerung des Verbindungsventils 52 vergrößert sich dessen durchströmbarer Querschnitt und desto geringer ist die Drosselwirkung. Um bei vollständig geöffnetem Verbindungsventil 52 einen hydraulischen Kurzschluss zu vermeiden, ist im Durchlassquerschnitt des Verbindungsventils 52 eine Drosselstelle ausgebildet, die wirksam ist, sobald das Verbindungsventil 52 nicht mehr seine Sperrstellung einnimmt.

Mit einer derart ausgebildeten Druckerzeugereinheit 30 ist bei der erfindungsgemäßen Fahrzeugbremsanlage die Versorgung mit Druckmittel im Volumen variabel steuerbar. Das bedeutet, dass abhängig vom Bedarf des jeweiligen Bremsvorgangs durch Schließen des Verbindungsventils 52 beide Pumpen 30a, 30b gemeinsam fördern und die Druckerzeugereinheit 30 damit ihr maximales Fördervolumen bereitstellt, während durch vollständige Öffnung der Druckmittelverbindung 50 nur eine der beiden Pumpen 30a, 30b Druckmittel fördert und die jeweils andere Pumpe 30b nur leer mitläuft bzw. ihr Fördervolumen über die Drosselstelle im Verbindungsventil 52 im Kreis pumpt. In diesem Zustand weist die Druckerzeugereinheit 30 folglich ihr minimales Fördervolumen auf. Durch eine angepasste elektronische Ansteuerung des Verbindungsventils 52 lassen sich auf diese Weise beliebig viele Zwischenstellungen einstellen und damit das Fördervolumen der Druckerzeugereinheit 30 an den jeweiligen Druckmittelbedarf der Fahrzeugbremsanlage flexibel anpassen. Ein großes Fördervolumen ist beispielsweise notwendig, wenn zu Beginn eines Notbremsvorgangs das Lüftspiel, bis die Bremsbeläge an ihren Bremskörpern anliegen, möglichst schnell zu überwinden ist. Ein geringes Fördervolumen ist demgegenüber ausreichend, um ab einer im elektronischen Steuergerät 21 hinterlegbaren Druckschwelle den letztlich erforderlichen Bremsdruck aufzubauen bzw. zu modulieren. Auch die Belastung des Antriebsmotors 40 der Pumpen 30a, 30b wird vergleichmäßigt, wenn die Druckerzegereinheit 30 bedarfsweise mit einer oder mit beiden Pumpen 30a, 30b fördert. Konventionelle Pumpeneinheiten 30 mit lediglich einer Pumpe und einem Antriebsmotor müssen die Anforderungen hinsichtlich Volumen und Druck gleichermaßen erfüllen, so dass ihre konstruktive Auslegung in Bezug auf ihre Abmessungen, das Gewicht, die Kosten und nicht zuletzt auf das Betriebsgeräusch nachteilig ist. Bezüglich des Betriebsgeräuschs sei angemerkt, dass eine erfindungsgemäße Druckerzeugereinheit auch eine Optimierung der vorsehbaren Geräuschdämpfungsmaßnahmen bei einer Fahrzeugbremsanlage gestattet, indem nunmehr verschiedenartige Pulsationsdämpfungseinheiten eingesetzt werden können, deren Dämpfungseigenschaften entweder auf große Druckmittelmengenförderung oder auf hohen Betriebsdrücke hin optimiert sind.

Selbstverständlich sind weitere Vorteile oder vorteilhafte Weiterbildungen der Erfindung denkbar ohne vom, durch die Ansprüche definierten Gegenstand der Erfindung abzuweichen.

## Patentansprüche

1. Elektronisch schlupfregelbare Fahrzeugbremsanlage mit wenigstens einem Bremskreis (10), wenigstens einer an den Bremskreis (10) angeschlossenen Radbremse (16) und einer antreibbaren Druckerzeugereinheit (30) zur Versorgung der Radbremse (16) mit Druckmittel unter einem Bremsdruck bzw. zur Anpassung dieses Bremsdrucks an die Schlupfverhältnisse eines der Radbremse (16) zugeordneten Rades,
wobei pro Bremskreis (10) eine Druckerzeugereinheit (30) mit wenigstens zwei Pumpen (30a, 30b) vorgesehen ist, welche in eine gemeinsame Druckleitung (42) fördern,
wobei elektronisch ansteuerbare Mittel (52) vorgesehen sind,
die in Abhängigkeit des Druckmittelvolumenbedarfs der Radbremse (16) eine Druckmittelverbindung (50) von der gemeinsamen Druckleitung (42) zu einer Saugseite wenigstens einer der Pumpen (30a, 30b) steuern und
wobei auf der jeweiligen Druckseite zwischen den Pumpen (30a, 30b) ein Rückschlagventil (44) angeordnet ist,
**dadurch gekennzeichnet,**
**dass** die Druckmittelverbindung (50), betrachtet in Durchströmungsrichtung des Rückschlagventils (44), stromaufwärts dieses Rückschlagventils (44) von der Druckleitung (42) abzweigt.

2. Elektronisch schlupfregelbare Fahrzeugbremsanlage nach Anspruch 1,
**dadurch gekennzeichnet, dass** die Pumpen (30a, 30b) der Druckerzeugereinheit (30) unterschiedlich große Volumen an Druckmittel fördern.

3. Elektronisch schlupfregelbare Fahrzeugbremsanlage nach einem der vorausgehenden Ansprüche, **dadurch gekennzeichnet, dass** die elektronisch steuerbaren Mittel (52) wenigstens ein von einem Aktuator betätigbares Ventil umfassen.

4. Elektronisch schlupfregelbare Fahrzeugbremsanlage nach einem der Ansprüche 1 bis 3, **dadurch gekennzeichnet, dass** das elektronisch steuerbare Mittel (52) ein Proportionalventil ist, das aus einer Sperrstellung in beliebig vielen Zwischenstellungen in eine Durchlassstellung verbringbar ist.

5. Elektronisch schlupfregelbare Fahrzeugbremsanlage nach einem der Ansprüche 1 bis 4, **dadurch gekennzeichnet, dass** das Mittel (52) mit einer Drosselstelle im Strömungsquerschnitt versehen ist.

## Claims

1. Electronically slip-controllable vehicle brake system comprising at least one brake circuit (10), at least one wheel brake (16) connected to the brake circuit (10), and a drivable pressure-generating unit (30) for supplying the wheel brake (16) with pressure medium under a brake pressure or for adapting this brake pressure to the slip conditions of a wheel assigned to the wheel brake (16),
wherein provided for each brake circuit (10) is a pressure-generating unit (30) having at least two pumps (30a, 30b) which deliver into a shared pressure line (42),
wherein electronically controllable means (52) are provided,
which control a pressure medium connection (50) from the shared pressure line (42) to a suction side of at least one of the pumps (30a, 30b) depending on the pressure medium volume demand of the wheel brake (16), and
wherein a non-return valve (44) is situated between the pumps (30a, 30b) on the particular pressure side, **characterized in that**
the pressure medium connection (50), as viewed in the flow direction of the non-return valve (44), branches off from the pressure line (42) upstream from this non-return valve (44).

2. Electronically slip-controllable vehicle brake system according to Claim 1, **characterized in that** the pumps (30a, 30b) of the pressure-generating unit (30) deliver different volumes of pressure medium.

3. Electronically slip-controllable vehicle brake system according to one of the preceding claims, **characterized in that** the electronically controllable means (52) comprise at least one valve which can be actuated by an actuator.

4. Electronically slip-controllable vehicle brake system according to one of Claims 1 to 3, **characterized in that** the electronically controllable means (52) is a proportional valve which can be brought into any number of intermediate positions from a blocking position into a passage position.

5. Electronically slip-controllable vehicle brake system according to one of Claims 1 to 4, **characterized in that** the means (52) are provided with a throttle point in the flow cross section.

## Revendications

1. Système de freinage de véhicule à commande de glissement électronique comprenant au moins un circuit de freinage (10), au moins un frein de roue (16) raccordé au circuit de freinage (10) et une unité de génération de pression entraînable (30) destinée à alimenter le frein de roue (16) en fluide sous pression sous une pression de freinage ou à adapter cette pression de freinage aux conditions de glissement d'une roue associée au frein de roue (16),
une unité de génération de pression (30) pourvue d'au moins deux pompes (30a, 30b) étant prévue pour chaque circuit de freinage (10), lesquelles pompes alimentent une conduite de pression commune (42),
des moyens à commande électronique (52) étant prévus qui commandent, en fonction de l'exigence de volume de fluide sous pression du frein de roue (16), une liaison de fluide sous pression (50) allant de la conduite de pression commune (42) à un côté aspiration d'au moins une des pompes (30a, 30b) et
un clapet anti-retour (44) étant disposé du côté pression respectif entre les pompes (30a, 30b),
**caractérisé en ce que**
la liaison de fluide sous pression (50), vue dans le sens d'écoulement à travers le clapet anti-retour (44), bifurque de la conduite de pression (42) en amont de ce clapet anti-retour (44).

2. Système de freinage de véhicule à commande de glissement électronique selon la revendication 1, **caractérisé en ce que** les pompes (30a, 30b) de l'unité de génération de pression (30) acheminent différents volumes de fluide sous pression.

3. Système de freinage de véhicule à commande de glissement électronique selon l'une des revendications précédentes, **caractérisé en ce que** les moyens à commande électronique (52) comprennent au moins une soupape pouvant être actionnée par un actionneur.

4. Système de freinage de véhicule à commande de glissement électronique selon l'une des revendications 1 à 3, **caractérisé en ce que** le moyen à commande électronique (52) est une soupape proportionnelle qui peut être déplacée d'une position de blocage dans un grand nombre quelconque de positions intermédiaires jusqu'à une position de passage.

5. Système de freinage de véhicule à commande de glissement électronique selon l'une des revendications 1 à 4, **caractérisé en ce que** le moyen (52) est pourvu d'un point d'étranglement situé dans la section d'écoulement.
